# FASCICULE DE BREVET EUROPEEN

(11) **EP 2 913 542 B1**
(45) Date de publication et mention de la délivrance du brevet: **09.09.2020**
(21) Numéro de dépôt: 15156627.0
(22) Date de dépôt: 25.02.2015
(51) Int. Cl.: F16C 7/04, F16C 11/06, F16C 11/08, F16C 9/04

(54) **Bielle antivibratoire**
Schwingungsdämpfende Pleuelstange
Anti-vibration rod

(30) Priorité: 27.02.2014 FR 1451612
(43) Date de publication de la demande: 02.09.2015
(73) Titulaire: HUTCHINSON, 75008 Paris (FR)
(72) Inventeur: Pizanti, Thierry, 28220 LA FERTE VILLENEUIL (FR); Stahl, Manfred, 28220 LANGEY (FR); Petit, Pascal, 45190 BEAUGENCY (FR); Ledoux, Antony, 45380 LA CHAPELLE SAINT MESNIN (FR)
(74) Mandataire: Plasseraud IP

(56) Documents cités:
- EP-A2- 1 247 678
- EP-A2- 1 387 108
- DE-A1-102009 028 458
- US-A- 1 913 513

## Description

### DOMAINE DE L'INVENTION

La présente invention est relative aux bielles antivibratoires, notamment pour véhicules automobiles.

### ARRIERE-PLAN DE L'INVENTION

Plus particulièrement, l'invention concerne une bielle antivibratoire comportant des première et deuxième articulations et un corps de bielle rigide s'étendant entre des première et deuxième extrémités reliées respectivement aux première et deuxième articulations, la deuxième articulation comprenant :
- une bague rigide ayant un axe central et s'étendant sur une certaine hauteur axiale, la bague comportant une fenêtre traversante,
- une armature interne rigide entourée par la bague,
- et un corps en élastomère surmoulé sur l'armature interne et sur l'intérieur de la bague,
ledit corps de bielle traversant ladite fenêtre en étant entouré par la bague et la deuxième extrémité du corps de bielle étant fixée à l'armature interne.

Le document EP-A-1247678 décrit un exemple d'articulation de ce type, qui fait partie d'une bielle antivibratoire dont le corps de bielle rigide traverse ladite fenêtre pour se fixer à l'armature interne. Dans cette articulation connue, la liaison élastique comporte deux corps en élastomères qui sont superposés axialement selon l'axe central et qui sont surmoulés respectivement sur deux armatures internes.

Cette articulation présente notamment les inconvénients suivants :
- le processus de fabrication est relativement coûteux du fait qu'il implique deux opérations de moulage pour réaliser les deux corps en élastomère,
- l'efficacité antivibratoire de l'articulation est limitée, du fait que le volume d'élastomère utilisable dans la liaison élastique entre l'armature intérieure et la bague est relativement faible en raison de la réalisation en deux pièces moulées séparément.

Par ailleurs, le document EP1387108 décrit une bielle dans laquelle une partie intérieure rigide s'étire le long de l'axe longitudinal d'un palier radial et est reliée par l'intermédiaire d'un support à un corps à supporter. Une partie extérieure rigide forme un contre-palier et entoure la partie interne de manière coaxiale en tant que surface. Un corps de support flexible relie la partie extérieure à la partie interne, qui se déplace verticalement par rapport à la partie extérieure d'un axe longitudinal.

Enfin, le document DE102009028458A1 décrit une bielle ayant une barre et un élément de couplage selon le préambule de la revendication 1 annexée.

### OBJETS ET RESUME DE L'INVENTION

La présente invention a notamment pour but de pallier les inconvénients susmentionnés.

A cet effet, selon l'invention, ledit corps en élastomère est moulé d'une seule pièce et s'étend sur une majeure partie de la hauteur axiale de la bague, y compris au niveau de ladite fenêtre, le corps en élastomère comporte deux bras disposés en V et s'étendant en divergeant respectivement depuis des premières extrémités surmoulées sur l'armature interne jusqu'à des deuxièmes extrémités surmoulées à l'intérieur de la bague de part et d'autre de la fenêtre,
et l'armature interne comporte un corps d'armature s'étendant sensiblement perpendiculairement à l'axe central de la bague et deux ailes latérales disposées de part et d'autre de la deuxième extrémité du corps de bielle, lesdites ailes latérales s'étendant parallèlement à l'axe central et ayant des surfaces externes sur lesquelles sont surmoulées les premières extrémités des bras du corps en élastomère, lesdites surfaces externes des ailes latérales divergeant en s'éloignant de la fenêtre de la bague.

Par moulé d'une seule pièce, on entend moulé en une seule opération de moulage, même s'il y a discontinuité de matière entre plusieurs parties du corps en élastomère.

Grâce à ces dispositions, il n'est plus nécessaire de faire appel à deux corps en élastomère moulés séparément puis assemblés pour relier l'armature interne à la bague. Il en résulte un gain en coût de revient de l'articulation, et un gain d'efficacité antivibratoire puisque la liaison élastique peut ainsi comporter plus de matière élastomère dans le volume disponible à l'intérieur de la bague.

Dans des modes de réalisation préférés de l'articulation selon l'invention, on peut éventuellement avoir recours en outre à l'une et/ou à l'autre des dispositions suivantes :
- l'armature interne comporte en outre une paroi arrière qui s'étend selon l'axe central et qui relie entre elles lesdites ailes latérales à l'opposé de la fenêtre de la bague, ladite paroi arrière délimitant avec le corps d'armature et les ailes latérales, un logement de corps de bielle dans lequel est emboîtée la deuxième extrémité du corps de bielle ;
- la deuxième extrémité du corps de bielle est traversée par une vis qui solidarise l'armature interne à un insert rigide, la deuxième extrémité du corps de bielle étant serrée par ladite vis entre l'insert et le corps d'armature ;
- l'insert comporte un corps d'insert qui s'étend sensiblement perpendiculairement à l'axe central et deux doigts qui s'étendent selon l'axe central, le corps d'insert étant serré par la vis contre la deuxième extrémité du corps de bielle et étant emboîté dans un logement d'insert délimité par les ailes latérales et la paroi arrière de l'armature interne, les doigts étant disposés sensiblement dans le prolongement des ailes latérales vers la fenêtre et le corps d'armature comportant une partie avant, disposée vers ladite fenêtre, qui est emboîtée avec la deuxième extrémité du corps de bielle entre les doigts de l'insert ;
- le corps d'insert comporte une partie arrière disposée vers la paroi arrière de l'armature interne, cette partie arrière du corps d'insert comportant deux surfaces latérales extérieures divergentes en direction de ladite paroi arrière, les ailes latérales et la paroi arrière de l'armature interne délimitant un logement de corps d'insert ayant une forme complémentaire de la partie arrière du corps d'insert et recevant par emboîtement ladite partie arrière du corps d'insert, le logement de corps de bielle étant délimité entre deux surfaces latérales intérieures parallèles appartenant aux ailes latérales de l'armature interne, la deuxième extrémité du corps de bielle comportant deux surfaces latérales extérieures parallèles prolongées par deux surfaces latérales extérieures convergentes qui convergent vers la première extrémité du corps de bielle, les surfaces latérales extérieures parallèles de la deuxième extrémité du corps de bielle étant emboîtées entre les surfaces latérales intérieures qui délimitent le logement de corps de bielle et les surfaces latérales extérieures convergentes de la deuxième extrémité du corps de bielle étant emboîtées entre les doigts de l'insert, qui présentent une forme complémentaire desdites surfaces latérales extérieures convergentes.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique montrant une application possible d'une bielle antivibratoire selon une forme de réalisation de l'invention, montée dans un véhicule,
- la figure 2 est une vue en perspective de trois quart de dessus, d'une bielle antivibratoire selon l'invention montée sur la caisse du véhicule,
- les figures 3 et 4 sont des vues en perspective de la bielle de la figure 2 démontée, respectivement de trois quart de dessus et de trois quart de dessous,
- la figure 5 est une vue en perspective et en coupe longitudinale de la bielle des figures 3 et 4,
- les figures 6 et 7 sont des vues éclatées de la bielle des figures 3 et 4, vue respectivement de trois quart de dessus et de trois quart de dessous, montrant la partie de la bielle située du côté de la caisse du véhicule,
- et les figures 8 et 9 sont des vues en perspectives de l'armature interne de l'articulation de la bielle située du côté de la caisse du véhicule, cette armature interne étant vue en perspective respectivement de trois quart de dessus et de trois quart de dessous.

### DESCRIPTION PLUS DETAILLEE

Sur les différentes figures, les mêmes références désignent des éléments identiques ou similaires.

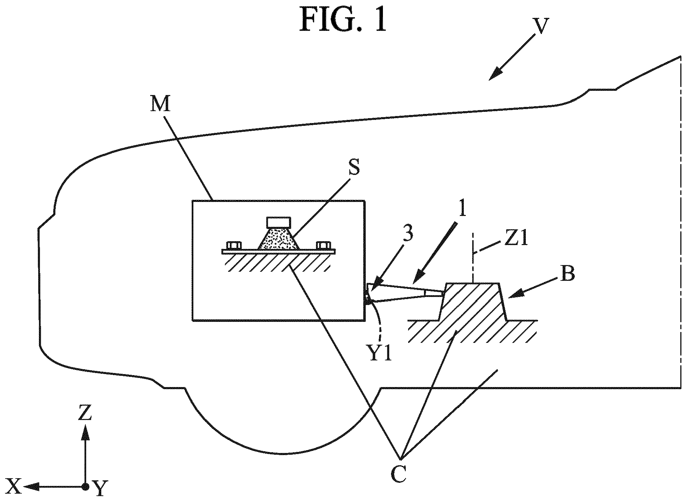

Comme représenté schématiquement sur la figure 1, l'invention concerne une bielle antivibratoire 1, notamment une bielle de reprise de couple pour véhicule V à moteur à combustion interne.

La bielle 1 peut être articulée :
- d'une part au moteur M, autour d'un axe transversal Yl parallèle à la direction transversale Y du véhicule,
- et d'autre part à la caisse C du véhicule, notamment au berceau moteur B, autour d'un axe vertical Zl.

La bielle 1 est adaptée notamment à la reprise du couple du moteur M lorsque celui-ci est monté sur la caisse C par une suspension pendulaire comprenant par exemple deux supports moteur antivibratoires S alignés selon la direction transversale Y du véhicule.

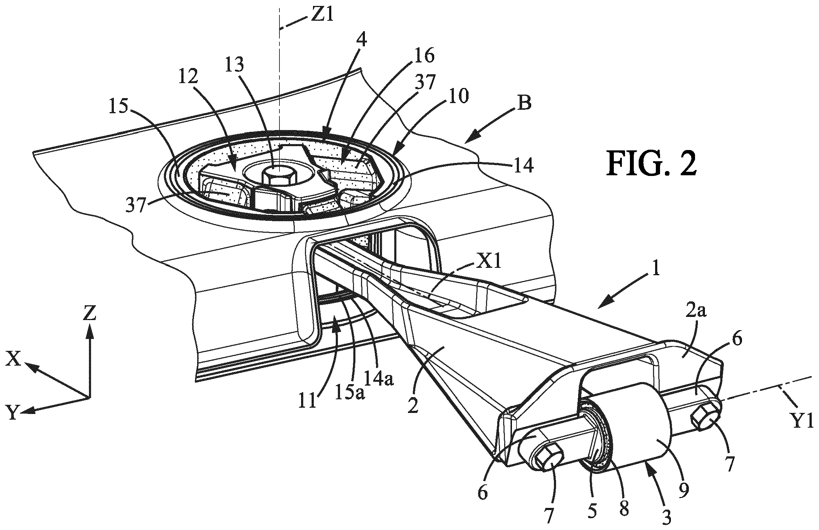

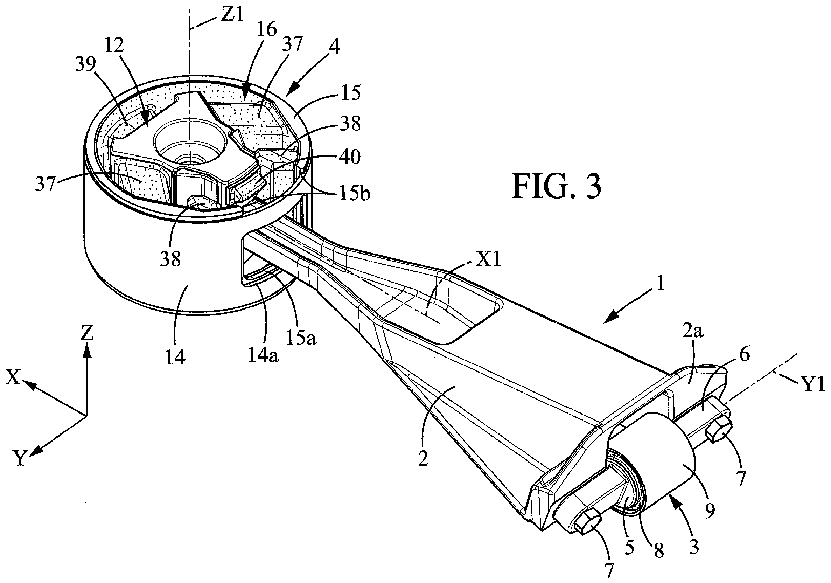

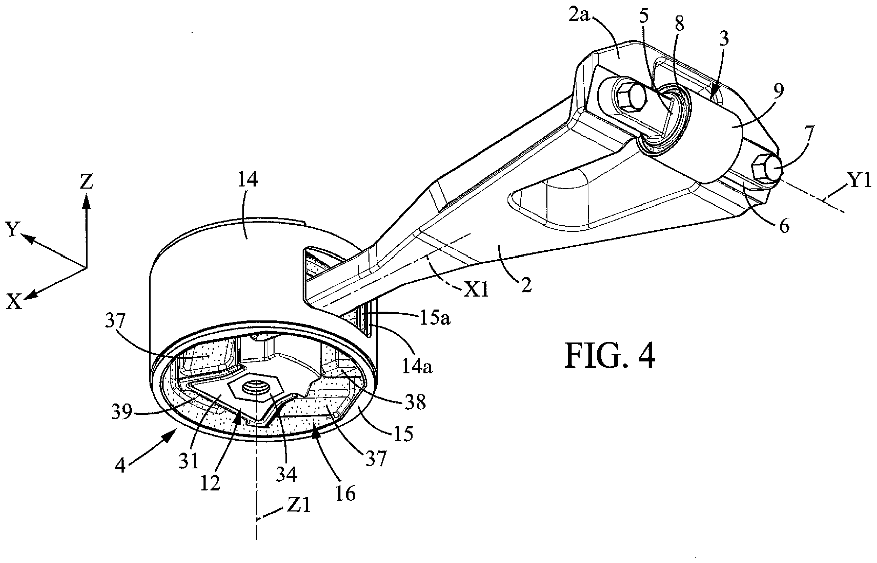

Comme représenté sur les figures 2 à 5, la bielle 1 comporte un corps de bielle rigide 2 qui s'étend longitudinalement entre des première et deuxième extrémités 2a, 2b reliées respectivement à des première et deuxième articulations antivibratoires 3, 4.

Le corps de bielle peut être réalisé par exemple en métal, notamment en alliage léger. Il s'étend longitudinalement selon une direction X1 qui peut être par exemple sensiblement parallèle à la direction longitudinale X du véhicule.

La première articulation 3 peut être fixée par exemple au moteur M et présenter un axe de rotation Yl comme indiqué ci-dessus. Cette première articulation peut comporter :
- une armature interne 5 rigide réalisée par exemple en métal,
- une bague externe 9 rigide réalisée par exemple en métal et entourant l'armature interne 5,
- et un corps en élastomère 8 interposé entre l'armature interne et la bague externe.

Dans l'exemple considéré, la bague externe 9 de la première articulation est destinée à être emboîtée dans un logement cylindrique d'une pièce de support liée au moteur M, tandis que l'armature interne 5 est prolongée à ses extrémités axiales, par deux pâtes de fixation 6 fixées à la première extrémité 2a du corps de bielle, par exemple par l'intermédiaire de vis 7.

La deuxième articulation 4, quant à elle, peut être par exemple emboîtée dans un puits 10 d'axe Zl appartenant au berceau moteur, le corps de bielle 2 traversant une ouverture latérale 11 ménagée dans ledit berceau moteur B.

La deuxième articulation 4 comprend :
- une armature interne 12 rigide, reliée à la deuxième extrémité 2b du corps de bielle par exemple par une vis 13,
- une bague externe 14, 15 rigide d'axe central Yl, entourant l'armature interne, la bague comportant une fenêtre traversante 14a, 15a, 15b traversée par le corps de bielle 2,
- et un corps en élastomère 16 surmoulé sur l'armature interne 12 et sur l'intérieur de la bague 14, 15.

Dans l'exemple représenté, l'armature intérieure 12 peut être une pièce moulée par exemple en matière plastique ou en alliage léger.

La bague externe 14, 15 pourrait être formée d'une seule pièce ; dans l'exemple considéré ici elle est formée en deux pièces annulaires concentriques, une bague extérieure 14 et une bague intérieure 15 solidarisée avec la bague extérieure 14 par tout moyen connu. La bague extérieure 14 peut être par exemple métallique et la bague intérieure 15 peut être par exemple moulée en matière plastique et clipsée dans la bague extérieure après moulage du corps en élastomère 16 dans la bague intérieure 15. La fenêtre susmentionnée de la bague intérieure 15 peut par exemple être réalisée sous forme d'une découpe en U ayant une base 15a et deux bords latéraux 15b, ce qui facilite le clipsage.

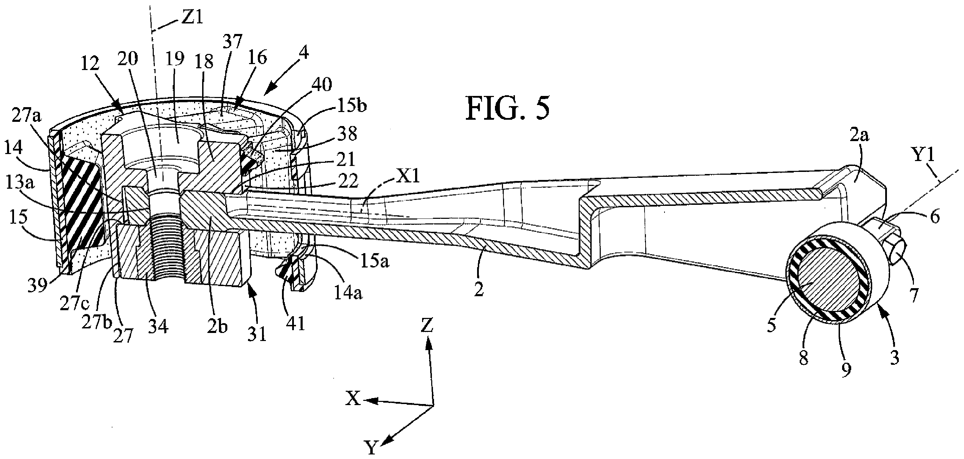

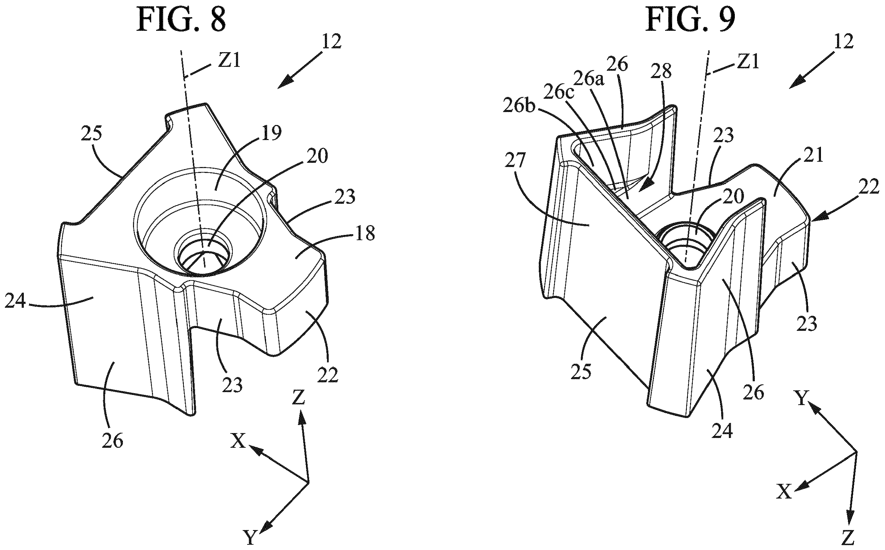

Comme on peut le voir plus en détail sur les figures 5 à 9, l'armature intérieure 12 peut comporter un corps d'armature 18 relativement épais et plat, s'étendant sensiblement dans un plan X, Y perpendiculairement à l'axe central Zl de la bague 14, 15.

Le corps d'armature 18 peut comporter sur sa face principale externe (ici supérieure) un chambrage 19 pour recevoir la tête de la vis 13, qui débouche dans un trou traversant 20 qui s'étend selon l'axe central Zl et reçoit la vis 13. La face principale interne 21 (ici inférieure) du corps d'armature 18 est de préférence une face plane perpendiculaire à l'axe central Zl.

Le corps d'armature 18 comporte une face avant 22 orientée dans la direction X vers le corps de bielle 2 et disposée ici en regard de la découpe 15a, 15b de la bague intérieure 15, au-dessus de la fenêtre 14a de la bague extérieure 14.

Cette paroi latérale avant 22 est prolongée vers l'arrière (c'est-à-dire à l'opposé de la fenêtre 14a, 15a, 15b), par deux faces latérales 23 opposées délimitant une partie avant du corps d'armature 18. Ces faces latérales 23 peuvent avantageusement être conformées pour diverger vers l'arrière. Les faces latérales 23 sont elles-mêmes prolongées vers l'arrière par deux faces latérales opposées 24 qui sont elles-aussi divergentes vers l'arrière et qui rejoignent une paroi arrière 25 opposée à la paroi avant 22.

Les parois latérales 24 sont prolongées parallèlement à l'axe central Zl, vers le bas, par deux ailes latérales 26 qui sont conformées également pour présenter des surfaces externes divergentes vers l'arrière. L'armature interne 12 comporte en outre une paroi arrière 27 qui s'étend également selon l'axe central Zl, vers le bas, et qui relie entre elles lesdites ailes latérales 26.

Les ailes latérales 26 comportent, sous la face interne 21 du corps d'armature, des surfaces latérales intérieures parallèles 26a qui s'étendent selon le plan X, Z et la paroi arrière présente, en correspondance avec ces surfaces intérieures parallèles 26a, une première surface intérieure 27a s'étendant selon la plan Y, Z. Ces surfaces intérieures 26a, 27a délimitent avec la face interne 21 du corps d'armature 18, un logement de corps de bielle dans lequel est emboîtée selon l'axe X1 la deuxième extrémité 2b du corps de bielle.

Les ailes latérales 26 peuvent en outre comporter, sous les surfaces latérales intérieures parallèles 26a, des surfaces latérales intérieures divergentes 26b qui divergent vers l'arrière et qui sont séparées des surfaces latérales intérieures 26a par des épaulements 26c orientés vers le bas. La paroi arrière 27 peut elle-même présenter une deuxième surface intérieure 27b séparée de la première surface intérieure 27a par un épaulement 27c orienté vers le bas. Ces surfaces intérieures 26b, 27b définissent un logement d'insert recevant un insert rigide 31.

L'insert 31, bien visible sur les figures 5 à 7, peut être une pièce moulée, réalisée par exemple en matière plastique.

L'insert 31 peut comporter un corps d'insert 32 qui est sensiblement plat et qui s'étend sensiblement perpendiculairement à l'axe central Zl.

Le corps d'insert 32 comporte une partie avant 32a et une partie arrière 32b. La partie arrière 32b présente deux surfaces latérales extérieures 33b divergentes vers l'arrière. Cette partie arrière 32b est emboîtée sans jeu dans le logement de corps d'insert susmentionné.

Le corps d'insert 32 est surmoulé sur un écrou 34 en acier ou autre, dans lequel se visse la vis 13 susmentionnée.

Le corps d'insert 32 comporte en outre une surface interne 35 (ici supérieure) plane et parallèle à la surface interne 21 du corps d'armature 18. Ces surfaces internes 21, 35 sont serrées contre la deuxième extrémité 2b du corps de bielle par serrage de la vis 13.

La partie avant 32a du corps d'insert 32 peut également présenter des surfaces latérales extérieures 33a divergentes vers l'arrière, qui sont prolongées selon l'axe central Zl par deux doigts 36 s'étendant vers le haut. Les doigts 36 de l'insert 31 peuvent avantageusement être disposés sensiblement dans le prolongement des ailes latérales 26 vers l'avant et conformés pour présenter des surfaces intérieures 36a divergentes vers l'arrière, en correspondance avec les surfaces latérales 23 de la partie avant du corps d'armature 18.

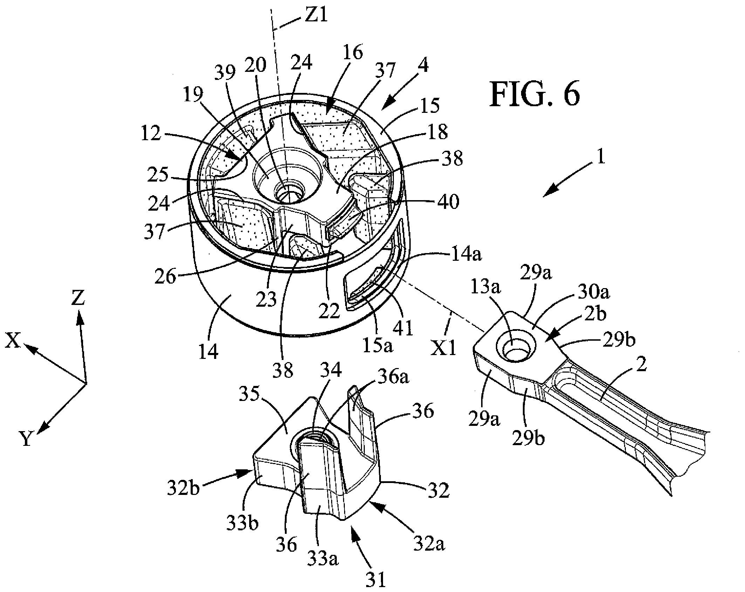

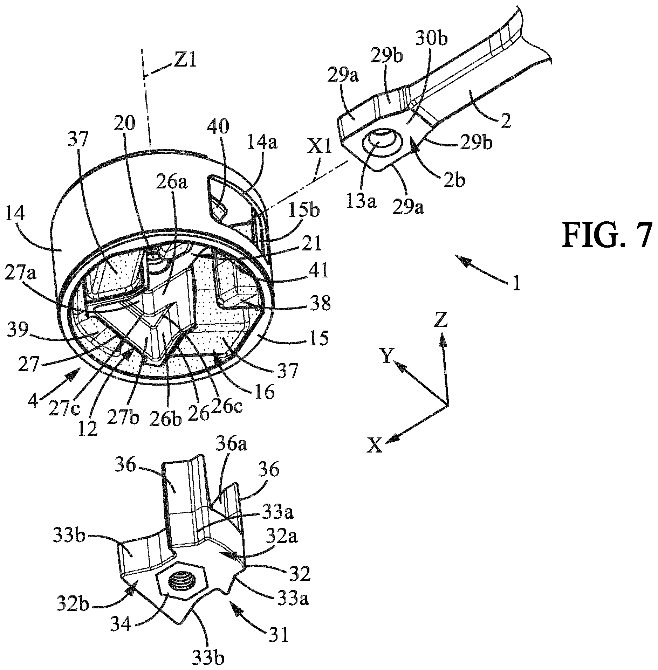

Comme représenté sur les figures 6 et 7, la deuxième extrémité 2b du corps de bielle est avantageusement conformée en correspondance avec le logement de corps de bielle susmentionné, délimité par les surfaces 26a, 27a, 21, 35, et elle est emboîtée sans jeu dans ledit logement. Cette deuxième extrémité 2b comporte :
- deux surfaces latérales extérieures parallèles 29a qui sont au contact des surfaces intérieures parallèles 26a,
- deux surfaces latérales extérieures convergentes 29b prolongeant respectivement les surfaces latérales extérieures parallèles 29a vers la première extrémité 2a du corps de bielle et engagées contre les surfaces intérieures convergentes 36a des doigts 36,
- deux faces principales parallèles 30a, 30b, planes et perpendiculaires à l'axe central Zl, qui sont traversées par le trou 13a susmentionné et qui sont serrées entre les surfaces internes 21, 35 appartenant respectivement à l'armature interne 12 et à l'insert 31.

Du fait de la conception de la deuxième extrémité 2b du corps de bielle, de l'armature interne 12 et de l'insert 31, l'assemblage entre ces pièces est particulièrement résistant.

Comme représenté plus en détail sur les figures 5 à 7, le corps en élastomère 16 est moulé d'une seule pièce et s'étend sur une majeure partie de la hauteur axiale de la bague 14, 15, y compris au niveau de la fenêtre 14a, 15a, 15b de ladite bague.

Le corps en élastomère 16 comporte deux bras 37 disposés en V et s'étendant en divergeant vers l'avant dans le plan X, Y, respectivement depuis des premières extrémités surmoulées respectivement sur les surfaces extérieures des ailes latérales 26, jusqu'à des deuxièmes extrémités surmoulées à l'intérieur de la bague de part et d'autre de la fenêtre. Les deuxièmes extrémités des bras 37 sont avantageusement surmoulées sur la surface intérieure de la bague intérieure 15 dans l'exemple considéré ici.

Dans l'exemple représenté, le corps en élastomère forme une mince couche d'élastomère sensiblement continue à l'intérieur de la bague 15 et à l'extérieur de l'armature interne 12, de sorte qu'il y a continuité de matière entre les deux bras 37. Il pourrait toutefois y avoir discontinuité de matière entre les deux bras 37, l'expression « moulé d'une seule pièce » devant être entendue ici comme signifiant que les deux bras 37 sont moulés en une seule opération de moulage.

Du fait de cette conception monomoulage, le prix de revient de la deuxième articulation 4 est réduit et cette deuxième articulation peut présenter une efficacité antivibratoire améliorée puisque la quantité d'élastomère utilisable dans le volume disponible à l'intérieur de la bague 14, 15 est augmentée.

Le corps en élastomère peut en outre comporter des butées 38-41, par exemple :
- deux butées latérales avant 38 disposées à l'intérieur de la bague 15 entre les bras 37 et adaptées pour coopérer par butée avec les faces externes des doigts 36 de l'insert 31,
- et / ou une butée arrière 39 disposée à l'intérieur de la bague 15 à l'opposé de la fenêtre 14a, 15a, 15b et adaptée pour coopérer par butée avec la paroi arrière 27 de l'armature interne 12,
- et / ou une butée avant 40 formée sur la face avant 22 du corps d'armature 18 et adaptée pour coopérer par butée avec la surface intérieure de la bague 14 au-dessus de la fenêtre 14a,
- et / ou une butée avant 41 formée à l'intérieur de la bague 15 au-dessous de la fenêtre 14a et adaptée pour coopérer par butée avec la partie avant 32a de l'insert 31.

Les butées avant 40, 41 sont de préférence décalées selon l'axe X1 de façon à ne pas présenter de zones de recouvrement, pour faciliter le moulage.

## Revendications

1. Bielle antivibratoire comportant des première et deuxième articulations (3, 4) et un corps de bielle (2) rigide s'étendant entre des première et deuxième extrémités (2a, 2b) reliées respectivement aux première et deuxième articulations (3, 4), la deuxième articulation (4) comprenant :
- une bague (14, 15) rigide ayant un axe central (Z1) et s'étendant sur une certaine hauteur axiale, la bague comportant une fenêtre traversante (14a, 15a, 15b),
- une armature interne (12) rigide entourée par la bague (14, 15),
- et un corps en élastomère (16) surmoulé sur l'armature interne (12) et sur l'intérieur de la bague (14, 15),
ledit corps de bielle (2) traversant ladite fenêtre (14a, 15a, 15b) en étant entouré par la bague (14, 15) et la deuxième extrémité (2b) du corps de bielle étant fixée à l'armature interne (12),
**caractérisée en ce que**
ledit corps en élastomère (16) est moulé d'une seule pièce et s'étend sur une majeure partie de la hauteur axiale de la bague, y compris au niveau de ladite fenêtre (14a, 15a, 15b),
le corps en élastomère (16) comporte deux bras (37) disposés en V s'étendant en divergeant respectivement depuis des premières extrémités surmoulées sur l'armature interne (12) jusqu'à des deuxièmes extrémités surmoulées à l'intérieur de la bague (14, 15) de part et d'autre de la fenêtre (14a, 15a, 15b), et **en ce que** l'armature interne (12) comporte un corps d'armature (18) s'étendant sensiblement perpendiculairement à l'axe central (Z1) de la bague et deux ailes latérales (26) disposées de part et d'autre de la deuxième extrémité (2b) du corps de bielle, lesdites ailes latérales (26) s'étendant parallèlement à l'axe central (Z1) et ayant des surfaces externes sur lesquelles sont surmoulées les premières extrémités des bras (37) du corps en élastomère, lesdites surfaces externes des ailes latérales divergeant en s'éloignant de la fenêtre (14a, 15a, 15b) de la bague.

2. Bielle antivibratoire selon la revendication 1, dans laquelle l'armature interne (12) comporte en outre une paroi arrière (27) qui s'étend selon l'axe central (Z1) et qui relie entre elles lesdites ailes latérales (26) à l'opposé de la fenêtre (14a, 15a, 15b) de la bague, ladite paroi arrière (27) délimitant avec le corps d'armature (18) et les ailes latérales (26), un logement de corps de bielle dans lequel est emboîtée la deuxième extrémité (2b) du corps de bielle.

3. Bielle antivibratoire selon la revendication 2, dans laquelle la deuxième extrémité (2b) du corps de bielle est traversée par une vis (13) qui solidarise l'armature interne (12) à un insert rigide (31), la deuxième extrémité (2b) du corps de bielle étant serrée par ladite vis (13) entre l'insert (31) et le corps d'armature (18).

4. Bielle antivibratoire selon la revendication 3, dans laquelle l'insert (31) comporte un corps d'insert (32) qui s'étend sensiblement perpendiculairement à l'axe central (Z1) et deux doigts (36) qui s'étendent selon l'axe central (Z1), le corps d'insert (32) étant serré par la vis (13) contre la deuxième extrémité (2b) du corps de bielle et étant emboîté dans un logement d'insert délimité par les ailes latérales (26) et la paroi arrière (27) de l'armature interne, les doigts (36) étant disposés sensiblement dans le prolongement des ailes latérales (26) vers la fenêtre (14a, 15a, 15b) et le corps d'armature (18) comportant une partie avant, disposée vers ladite fenêtre, qui est emboîtée avec la deuxième extrémité (2b) du corps de bielle entre les doigts (36) de l'insert.

5. Bielle antivibratoire selon la revendication 4, dans laquelle le corps d'insert (32) comporte une partie arrière (32b) disposée vers la paroi arrière (27) de l'armature interne, cette partie arrière (32b) du corps d'insert comportant deux surfaces latérales extérieures (33b) divergentes en direction de ladite paroi arrière (27), les ailes latérales (26) et la paroi arrière (27) de l'armature interne délimitant un logement de corps d'insert (26b, 27b) ayant une forme complémentaire de la partie arrière (32b) du corps d'insert et recevant par emboîtement ladite partie arrière du corps d'insert, le logement de corps de bielle étant délimité entre surfaces latérales intérieures (26a) parallèles appartenant aux ailes latérales de l'armature interne, la deuxième extrémité (2b) du corps de bielle comportant deux surfaces latérales extérieures parallèles (29a) prolongées par deux surfaces latérales extérieures convergentes (29b) qui convergent vers la première extrémité (2a) du corps de bielle, les surfaces latérales extérieures parallèles (29a) de la deuxième extrémité du corps de bielle étant emboîtées entre les surfaces latérales intérieures (26a) qui délimitent le logement de corps de bielle et les surfaces latérales extérieures convergentes (29b) de la deuxième extrémité du corps de bielle étant emboîtées entre les doigts (36) de l'insert, qui présentent une forme complémentaire desdites surfaces latérales extérieures convergentes (29b).

## Patentansprüche

1. Schwingungsdämpfende Pleuelstange umfassend ein erstes und ein zweites Gelenk (3, 4) und einem starren Pleuelstangenkörper (2), der sich zwischen einem ersten und einem zweiten Ende (2a, 2b) erstreckt, die mit dem ersten bzw. dem zweiten Gelenk (3, 4) verbunden sind, wobei das zweite Gelenk (4) umfasst:
- einen starren Ring (14, 15), der eine Mittelachse (Z1) aufweist und sich über eine bestimmte axiale Höhe erstreckt, wobei der Ring ein hindurch verlaufendes Fenster (14a, 15a, 15b) umfasst,
- eine starre innere Armatur (12), die von dem Ring (14, 15) umgeben ist,
- und einen Elastomerkörper (16), der auf die innere Armatur (12) und auf die Innenseite des Rings (14, 15) aufgeformt ist, wobei der Pleuelstangenkörper (2) durch das Fenster (14a, 15a, 15b) hindurch verläuft und dabei von dem Ring (14, 15) umgeben ist und wobei das zweite Ende (2b) des Pleuelstangenkörpers an der inneren Armatur (12) befestigt ist, **dadurch gekennzeichnet, dass** der Elastomerkörper (16) einstückig geformt ist und sich über einen Großteil der axialen Höhe des Rings erstreckt, einschließlich auf Höhe des Fensters (14a, 15a, 15b), wobei der Elastomerkörper (16) zwei V-förmig angeordnete Arme (37) aufweist, die sich jeweils divergierend von ersten, auf die innere Armatur (12) aufgeformten Enden zu zweiten, im Inneren des Ringes (14, 15) auf beiden Seiten des Fensters (14a, 15a, 15b) aufgeformten Enden erstrecken, und dadurch dass die innere Armatur (12) einen Armaturkörper (18) umfasst, der sich im Wesentlichen senkrecht zur Mittelachse (Z1) des Ringes erstreckt, und zwei seitliche Flügel (26) umfasst, die auf beiden Seiten des zweiten Endes (2b) des Pleuelstangenkörpers angeordnet sind, wobei sich die Seitenflügel (26) parallel zur Mittelachse (Z1) erstrecken und Außenflächen aufweisen, auf die die ersten Enden der Arme (37) des Elastomerkörpers aufgeformt sind, wobei die Außenflächen der Seitenflügel von dem Fenster (14a, 15a, 15b) des Rings weg divergieren.

2. Schwingungsdämpfende Pleuelstange nach Anspruch 1, wobei die innere Armatur (12) außerdem eine Rückwand (27) aufweist, die sich entlang der Mittelachse (Z1) erstreckt und die die Seitenflügel gegenüber dem Fenster (14a, 15a, 15b) des Rings miteinander verbindet, wobei die Rückwand (27) zusammen mit dem Armaturkörper (18) und den Seitenflügeln (26) eine Pleuelstangenkörperaufnahme begrenzt, in der das zweite Ende (2b) des Pleuelstangenkörpers eingesetzt ist.

3. Schwingungsdämpfende Pleuelstange nach Anspruch 2, wobei das zweite Ende (2b) des Pleuelstangenkörpers von einer Schraube (13) durchsetzt wird, die die innere Armatur (12) mit einem starren Einsatz (31) verbindet, wobei das zweite Ende (2b) des Pleuelstangenkörpers von der Schraube (13) zwischen dem Einsatz (31) und dem Armaturkörper (18) eingeklemmt ist.

4. Schwingungsdämpfende Pleuelstange nach Anspruch 3, wobei der Einsatz (31) einen Einsatzkörper (32) umfasst, der sich im Wesentlichen senkrecht zur Mittelachse (Z1) erstreckt, und zwei Finger (36) umfasst, die sich entlang der Mittelachse (Z1) erstrecken, wobei der Einsatzkörper (32) durch die Schraube (13) gegen das zweite Ende (2b) des Pleuelstangenkörpers geklemmt ist und in eine Einsatzaufnahme eingepasst ist, die durch die Seitenflügel (26) und die Rückwand (27) der inneren Armatur begrenzt ist, wobei die Finger (36) im Wesentlichen in der Verlängerung der Seitenflügel (26) zum Fenster (14a, 15a, 15b) hin angeordnet sind und der Pleuelstangenkörper (18) einen zum Fenster hin angeordneten vorderen Teil aufweist, der mit dem zweiten Ende (2b) des Pleuelstangenkörpers zwischen den Fingern (36) des Einsatzes eingepasst ist.

5. Schwingungsdämpfende Pleuelstange nach Anspruch 4, wobei der Einsatzkörper (32) einen hinteren Teil (32b) aufweist, der in Richtung der Rückwand (27) der inneren Armatur angeordnet ist, wobei dieser hintere Teil (32b) des Einsatzkörpers zwei äußere Seitenflächen (33b) aufweist, die in Richtung der Rückwand (27) divergieren, wobei die Seitenflügel (26) und die Rückwand (27) der inneren Armatur eine Einsatzkörperaufnahme (26b, 27b) begrenzen welche eine zu dem hinteren Teil (32b) des Einsatzkörpers komplementäre Form aufweist und den hinteren Teil des Einsatzkörpers durch Einpassung aufnimmt, wobei die Pleuelstangenkörperaufnahme zwischen parallelen inneren Seitenflächen (26a) begrenzt ist, die zu den Seitenflügeln der inneren Armatur gehören, wobei das zweite Ende (2b) des Pleuelstangenkörpers zwei parallele äußere Seitenflächen (29a) aufweist, die durch zwei konvergierende Seitenflächen (29b) verlängert sind, die in Richtung des ersten Endes (2a) des Pleuelstangenkörpers konvergieren, wobei die parallelen äußeren Seitenflächen (29a) des zweiten Endes des Pleuelstangenkörpers zwischen die inneren Seitenflächen (26a) eingepasst sind, die die Pleuelstangenkörperaufnahme begrenzen, und die konvergierenden äußeren Seitenflächen (29b) des zweiten Endes des Pleuelstangenkörpers zwischen die Finger (36) des Einsatzes eingepasst sind, die eine zu den konvergierenden äußeren Seitenflächen (29b) komplementäre Form aufweisen.

## Claims

1. Vibration-dampening rod having first and second joints (3, 4) and a rigid rod body (2) extending between first and second ends (2a, 2b) respectively connected to the first and second joints (3, 4), the second joint (4) comprising:
- a rigid ring (14, 15) having a central axis (Z1) and extending for a certain axial height, the ring comprising a through-window (14a, 15a, 15b),
- a rigid inner frame (12) surrounded by the ring (14, 15),
- and an elastomeric body (16) overmolded on the inner frame (12) and on the inside of the ring (14, 15), said rod body (2) traversing said window (14a, 15a, 15b) and being surrounded by the ring (14, 15), and the second end (2b) of the rod body being fixed to the inner frame (12),
**characterized in that** said elastomeric body (16) is molded as one piece and extends over a major portion of the axial height of the ring, including at said window (14a, 15a, 15b),
the elastomeric body (16) comprises two arms (37) arranged in a V and respectively extending in a diverging manner from first ends overmolded on the inner frame (12), to second ends overmolded on the inside of the ring (14, 15) on each side of the window (14a, 15a, 15b),
the inner frame (12) comprises a frame body (18) extending substantially perpendicularly to the central axis (Z1) of the ring and two side fins (26) arranged one on either side of the second end (2b) of the rod body, said side fins (26) extending parallel to the central axis (Z1) and having outer surfaces on which are overmolded the first ends of the arms (37) of the elastomeric body, said outer surfaces of the side fins diverging away from the ring window (14a, 15a, 15b).

2. Vibration-dampening rod according to claim 1, wherein the inner frame (12) further comprises a rear wall (27) extending along the central axis (Z1) and interconnecting said side fins (26) opposite the ring window (14a, 15a, 15b), said rear wall (27) defining, together with the frame body (18) and the side fins (26), a rod body housing into which the second end (2b) of the rod body is fitted.

3. Vibration-dampening rod according to claim 2, wherein the second end (2b) of the rod body is traversed by a screw (13) that secures the inner frame (12) to a rigid insert (31), the second end (2b) of the rod body being clamped between the insert (31) and the frame body (18) by said screw (13).

4. Vibration-dampening rod according to claim 3, wherein the insert (31) comprises an insert body (32) which extends substantially perpendicularly to the central axis (Z1) and two fingers (36) which extend along the central axis (Z1), the insert body (32) being clamped by the screw (13) against the second end (2b) of the rod body and being fitted into an insert housing defined by the side fins (26) and rear wall (27) of the inner frame, the fingers (36) being arranged substantially as an extension of the side fins (26) toward the window (14a, 15a, 15b), and the frame body (18) comprising a front portion arranged near said window, said front portion being nested with the second end (2b) of the rod body between the fingers (36) of the insert.

5. Vibration-dampening rod according to claim 4, wherein the insert body (32) comprises a rear portion (32b) arranged near the rear wall (27) of the inner frame, said rear portion (32b) of the insert body comprising two outer side surfaces (33b) diverging toward said rear wall (27), the side fins (26) and the rear wall (27) of the inner frame together defining an insert body housing (26b, 27b) having a shape complementary to the rear portion (32b) of the insert body and said rear portion of the insert body nesting within it, the rod body housing being delimited between parallel inner side surfaces (26a) that are part of the side fins of the inner frame, the second end (2b) of the rod body comprising two parallel outer side surfaces (29a) extended by two converging outer side surfaces (29b) which converge toward the first end (2a) of the rod body, the parallel outer side surfaces (29a) of the second end of the rod body nesting between the inner side surfaces (26a) which define the rod body housing and the converging outer side surfaces (29b) of the second end of the rod body nesting between the fingers (36) of the insert, which have a shape complementary to said converging outer side surfaces (29b).
